# EUROPÄISCHE PATENTSCHRIFT

(11) **EP 2 578 056 B1**
(45) Veröffentlichungstag und Bekanntmachung des Hinweises auf die Patenterteilung: **14.05.2014**
(21) Anmeldenummer: 11722366.9
(22) Anmeldetag: 16.05.2011
(51) Int. Cl.: H05B 6/02, H05B 6/10

(54) **VORRICHTUNG ZUM ERWÄRMEN EINES WERKSTÜCKS, INSBESONDERE EINES WÄLZLAGERS**
DEVICE FOR HEATING A WORKPIECE, IN PARTICULAR A BALL BEARING
DISPOSITIF D'ÉCHAUDAGE D'UNE PIÈCE USINÉE, NOTAMMENT D'UN PALIER À ROULEMENT

(30) Priorität: 26.05.2010 EP 10163943
(43) Veröffentlichungstag der Anmeldung: 10.04.2013
(73) Patentinhaber: simatec ag, 3380 Wangen an der Aare (CH)
(72) Erfinder: GFELLER, Hans, CH-4912 Aarwangen (CH); WYSSMANN, Max, CH-3360 Herzogenbuchsee (CH)
(74) Vertreter: Fischer, Michael
(86) Internationale Anmeldenummer: PCT/EP2011/057876
(87) Internationale Veröffentlichungsnummer: WO 2011/147706

(56) Entgegenhaltungen:
- WO-A1-2009/112247
- WO-A1-2010/037414
- DE-U1-202004 011 590
- GB-A- 1 454 783
- US-A- 4 311 896

## Beschreibung

Die vorliegende Erfindung bezieht sich auf eine Vorrichtung zum Erwärmen eines Werkstücks, insbesondere eines Wälzlagers.

Vorrichtungen zum Erwärmen von Wälzlagern werden dazu eingesetzt, um Lager oder ringförmige Teile ohne Kraftaufwand auf eine Welle oder in das Gehäuse eines Lagers zu montieren. Dabei wird die Wärmeausdehnung der Metalle genutzt, um den erforderlichen Spielraum zum Einpassen des Lagers oder der ringförmigen Teile zu erlangen. Zur raschen Erwärmung des Wälzlagers werden heutzutage häufig Induktions-Anwärmgeräte anstelle von beispielsweise heissen Ölbädern, Wärmeplatten oder Öfen wie sie früher benutzt wurden, eingesetzt.

Derartige Induktionsanwärmgeräte sind beispielsweise unter dem Markennamen "simatherm" der simatec AG, Wangen an der Aare, Schweiz, erhältlich. Diese Induktionsanwärmgeräte sind mit geblechten Eisenkernen, weg nehmbarem, verschiebbaren oder schwenkbaren Jochen und Induktionsspule aufgebaut. Die Geräte arbeiten typischerweise auf Netzfrequenz 50Hz/60Hz. Das anzuwärmenden Wälzlagers wird über die Induktionsspule oder Joch aufgelegt. Zur Abdeckung verschiedener Wälzlagergrössen können auch verschieden grosse Joche innerhalb des Magnetkreises angeordnet werden. Die Erwärmung des Wälzlagers erfolgt über Induktionsstromfluss gezielt im Innenring des Wälzlagers.

Aus physikalischen Gründen bedingt sind derartige Induktionsanwärmgeräte aber vergleichsweise schwer und erfordern in Abhängigkeit von dem Gewicht des Wälzlagers für das Aufhängen und Abnehmen des Wälzlagers auch zum Teil ganz erhebliche Kräfte. Zudem können derartige Induktionanwärmgeräte nicht einfach transportiert werden Der vorliegenden Erfindung liegt daher die Aufgabe zugrunde, eine Vorrichtung zum Anwärmen eines Werkstücks, insbesondere eines Wälzlagers, anzugeben, welche sich durch eine geringe Leistungsaufnahme, eine schnelle Anwärmphase, die zum Beispiel eine gezielte Anwärmung des Wälzlager-Innenrings ermöglicht, und sich durch ein geringes Gewicht auszeichnet und dadurch auch für den mobilen Einsatz sehr geeignet ist.

Die Aufgabe wird erfindungsgemäss durch eine Vorrichtung zum Anwärmen eines Werkstücks, insbesondere eines Wälzlagers, gelöst, wobei die Vorrichtung die folgenden Bestandteile umfassend:
a) eine kegelstumpf-artig geformte Auflagefläche zur liegenden Lagerung des Werkstücks;
b) eine unterhalb der Auflagefläche angeordnete einlagige Magnetspule, die der Formgebung der Auflagefläche im Bezug auf ihre überdeckte Fläche und Steigung im Wesentlichen folgt; und
c) einen Treiberschwingkreis zur Erzeugung eines Wechselmagnetfeldes in der Magnetspule.

Auf diese Weise kann das Werkstück sehr schnell und induktiv aufgeheizt werden und muss wegen seiner liegenden Lagerung auf der Auflagefläche auch nicht auf ein Magnetjoch aufgeschoben werden. Aufgrund der flächenartigen Ausgestaltung der Magnetspule, die der kegelstumpf-artigen Form der Auflagefläche folgt, kann der Treiberschwingkreis hochfrequent betrieben werden, was eine geringe Leistungsaufnahme und Baugrösse bedingt. Durch den von der kegelstumpf-artigen Magnetspule hervorgerufenen Verlauf der Feldlinien des magnetischen Wechselfeld tritt das Magnetfeld so gezielt in den Innenbereich des Werksstücks, beispielsweise in den Innenring eines Wälzlagers, direkt in die zu erwärmenden Bereiche ein und sorgt somit für eine besonders homogene und effiziente Anwärmung des Werkstücks. Um den magnetischen Kreis besonders gut zurückführen zu können, kann es vorgesehen sein, unterhalb der Magnetspule radial verlaufende Ferritstäbe anzuordnen. Eine geeignete Anzahl dieser radial verlaufenden Ferritstäbe koppelt so die im Luftraum unterhalb des Werkstücks verlaufenden Feldlinie wieder zurück. Bei dem vorliegenden in der Regel kreisrunden Auflagefläche sind zum Beispiel acht gleichmässig verteilte Ferritstäbe geeignet.

Um im Besonderen auch kleine Werkstücke anwärmen zu können, kann im Zentrum der Auflagefläche ein kaminartig geformter Zapfen angeordnet sein, auf dessen Aussenumfang ebenfalls Windungen der Magnetspule angeordnet sind. Alternativ kann aber auch eine Ausgestaltung dahingehend vorgesehen sein, dass im Zentrum der Auflagefläche ein kegelförmiger Aufsatz mit einem Ferritkern zur Rückführung der Feldlinien angeordnet ist.

Der Betrieb dieser Vorrichtung kann dann besonders günstig erzielt werden, wenn eine Frequenz des Wechselmagnetfeldes im Bereich von 10 bis 50 kHz, vorzugsweise im Bereich von 20 bis 30 kHz, liegt. Damit liegt die Treiberfrequenz des Treiberschwingkreises in einem Bereich, der so zum Beispiel auch für Induktionskochfelder genutzt wird.

Zur sicheren Lagerung des Wälzlagers kann die Auflagefläche als wärmebeständiger Kunststoffteller ausgestaltet sein, der vorzugsweise eine genormten Wälzlagermassen entsprechende Rasterung oder Stufenzentrierung aufweist.

Um einen möglichst sparsamen Betrieb der Vorrichtung erzielen zu können, kann es vorgesehen sein, dass der Treiberschwingkreis Werkstück-abhängig seinen Arbeitspunkt automatisch durch ein Abstimmen der Frequenz in Abhängigkeit von der Impulsantwort zumindest möglichst nahe an der Resonanzfrequenz wählt. Hierzu kann die Treiberfrequenz beispielsweise mit einem Synthesizer stufenartig durchgestimmt werden, beispielsweise in Schritten von 200 Hz, oder auch kleiner, wenn die Nähe der Resonanzfrequenz erreicht wird.

Um infolge einer Überhitzung auftretende Gefügeveränderungen des metallischen Werkstücks sicher ausschliessen zu können, kann eine Temperatursonde zur Messung der Temperatur des Wälzlagers zur Einstellung des Treiberschwingkreises vorgesehen sein. Für eine diesbezügliche Regelung ist die Temperatur somit die Regelgrösse am Eingang des Regelkreises.

Alternativ oder auch ergänzend zu der vorstehenden Temperatureinstellung kann eine Timerschaltung vorgesehen sein, um den Treiberschwingkreis für eine vorgebbare Zeitdauer einzuschalten.

Bevorzugte Ausführungsbeispiele der vorliegenden Erfindung werden nachfolgend anhand einer Zeichnung näher erläutert. Dabei zeigen:
- Figur 1: in schematischer Darstellung eine Seite eines Längsschnitts durch ein Anwärmgerät mit zwei beispielhaft aufgelegten Wälzlagern;
- Figur 2: in schematischer Darstellung den Verlauf der magnetischen Feldlinien für das grössere der beiden in Figur 1 aufgelegten Wälzlager; und
- Figur 3: in schematischer Darstellung den Verlauf der magnetischen Feldlinien für das kleinere der beiden in Figur 1 aufgelegten Wälzlager;

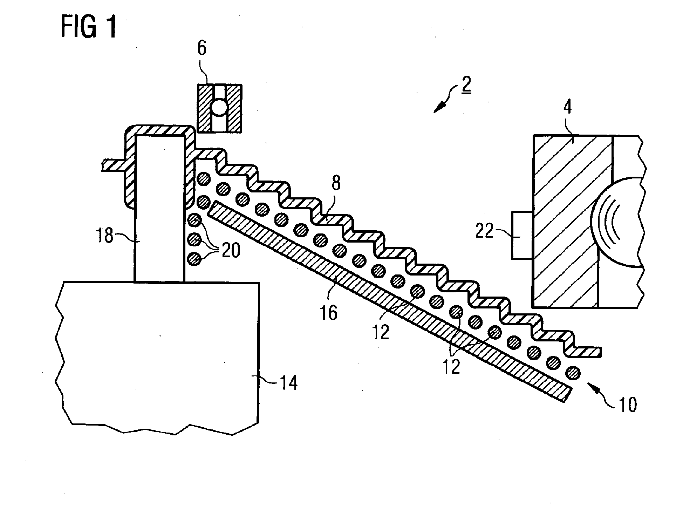

Figur 1 zeigt in schematischer Darstellung eine Seite eines Längsschnitts durch ein Anwärmgerät 2 mit zwei beispielhaft aufgelegten Wälzlagern 4, 6 (im Betrieb befindet sich in der Regel nur ein Wälzlager auf dem Anwärmgerät 2). Das Anwärmgerät 2 umfasst dabei eine kegelstumpf-artig geformte Auflagefläche 8 zur liegenden Lagerung des Wälzlagers 4, 6. Unterhalb der Auflagefläche 8 ist eine einlagige Magnetspule 10 mit ihren Windungen 12 angeordnet, die der Formgebung der Auflagefläche 8 im Bezug auf die von ihr überdeckte Fläche und auf die Steigung im Wesentlichen folgt. Weiter ist ein Treiberschwingkreis 14 zur Erzeugung eines Wechselmagnetfeldes in der Magnetspule 10 vorgesehen. Zur Rückkopplung des von der Magnetspule 10 erzeugten Magnetfeldes sind unterhalb der Magnetspule 10 radial verlaufende Ferritstäbe 16 angeordnet sind.

Im vorliegenden Ausführungsbeispiel ist im Zentrum der Auflagefläche 8 ein kaminartig geformter Zapfen 18 angeordnet ist, auf dessen Aussenumfang ebenfalls Windungen 20 der Magnetspule 10 angeordnet sind. Diese Ausgestaltung erlaubt es, auch kleine Wälzlager 6, hier zum Beispiel ein Lager des Typs 6002 mit einem Innendurchmesser von 15 mm, schnell und effizient anwärmen zu können. Alternativ zu dem Zapfen 18 könnte auch in hier nicht weiter dargestellter Weise ein kegelförmiger Aufsatz mit einem Ferritkern angeordnet sein.

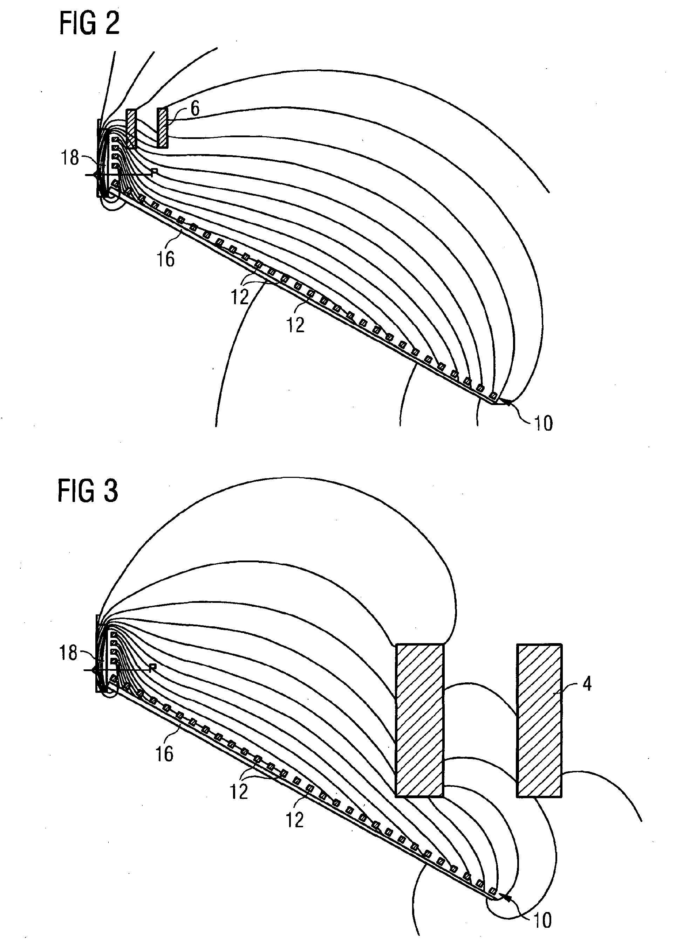

Der Verlauf der magnetischen Feldlinien für dieses kleine Wälzlager 6 ist in Figur 2 dargestellt. Entsprechend zeigt Figur 3 den Verlauf der magnetischen Feldlinien für ein grösseres Wälzlager 4, hier zum Beispiel ein Lager des Typs 6030 mit einem Innendurchmesser von 150 mm. Für beide Wälzlager 4 und 6 zeigen die Figuren 2 und 3 sehr anschaulich, dass die magnetischen Feldlinien aufgrund der kegelstumpf-artigen Form der Magnetspule 10 nicht nur auf der Unterseite der Lager 4, 6 Wirbelströme verursachen, sondern auch auf der Oberseite der Lager 4, 6 eintreten und dort ebenfalls eine Erwärmung durch Wirbelströme in bevorzugter Weise in dem Innenbereich des Werkstücks, hier vorliegend in dem Innenring des Wälzlagers, hervorrufen.

Der Betrieb dieses Anwärmgeräts 2 ist vorliegend mit einer Frequenz des Wechselmagnetfeldes von 25 kHz vorgesehen. Im Allgemeinen kann diese Frequenz in einem Bereich von 10 bis 50 kHz, vorzugsweise im Bereich von 20 bis 30 kHz, liegen. Diese Treiberfrequenz liegt daher in einem Bereich, wie er auch für Induktionskochfelder genutzt wird.

Im vorliegenden Ausführungsbeispiel ist die Auflagefläche 8 als wärmebeständiger Kunststoffteller ausgeführt und weist eine genormten Wälzlagermassen entsprechende Stufenzentrierung auf. So kann ein Wälzlager in liegender Lage zentriert auf dem Anwärmgerät 2 platziert werden, wodurch sich eine über den Umfang des Wälzlagers homogene Erwärmung ergibt. Die Steigung der Auflagefläche 8 beträgt in diesem Ausführungsbeispiel etwa 30° und liegt damit innerhalb eines sinnvollen Bereichs von etwa 15 bis 45°. Dabei ist anzumerken, dass der Kegel weder eine konstante noch eine stetige Steigung aufweisen muss, sondern bedarfgerecht zur Funktionsoptimierung auch einen nichtkonstanten oder unsteten Verlauf der Steigung aufweisen kann.

Der Treiberschwingkreis 14 des Anwärmgeräts 2 ist in diesem Ausführungsbeispiel so gestaltet, dass eine Abstimmungslogik zur Bestimmung eines Werkstück-abhängigen vorteilhaften Arbeitspunkts vorgesehen ist. Die Abstimmungslogik versucht automatisch durch ein Abstimmen der Frequenz in Abhängigkeit von der Impulsantwort eine Treiberfrequenz einzustellen, die zumindest möglichst nahe an der Resonanzfrequenz (mit aufgelegtem Werkstück/Wälzlager) liegt. Hierzu wird die Treiberfrequenz mit einem Synthesizer stufenartig durchgestimmt, hier vorliegend in Schritten von 200 Hz, oder dann auch kleiner, wenn die Nähe der Resonanzfrequenz erreicht wird.

Um infolge einer Überhitzung auftretende Gefügeveränderungen des metallischen Wälzlagers sicher ausschliessen zu können, ist eine Temperatursonde zur Messung der Temperatur des Wälzlagers 4 zur Einstellung des Treiberschwingkreises vorgesehen ist. Für eine diesbezügliche Regelung ist die Temperatur somit die Regelgrösse am Eingang des Regelkreises. Alternativ oder auch ergänzend zu der vorstehenden Temperatureinstellung kann eine Timerschaltung vorgesehen sein, um den Treiberschwingkreis für eine vorgebbare Zeitdauer einzuschalten.

Das vorliegende Anwärmgerät 2 wärmt daher ein Wälzlager oder allgemein auch jedes beliebige, vorzugsweise ringförmige metallische Werkstück schnell und induktiv auf. Wegen der liegenden Lagerung des Wälzlagers 4, 6 auf der Auflagefläche 8 muss das Wälzlager auch nicht auf ein Magnetjoch aufgeschoben werden, so wie dies im Stand der Technik erforderlich ist. Aufgrund der flächenartigen Ausgestaltung der Magnetspule 10, die der kegelstumpf-artigen Form der Auflagefläche 8 folgt, kann der Treiberschwingkreis hochfrequent betrieben werden, was eine geringe Leistungsaufnahme bedingt. Durch den so hervorgerufenen Verlauf der Feldlinien des magnetischen Wechselfeld tritt das Magnetfeld auch auf der Oberseite des Wälzlagers 4, 6 direkt in die zu erwärmenden inneren Bereiche ein und sorgt somit für eine besonders homogene gezielte Anwärmung des Werkstück-Innenbereichs. Hinsichtlich der Anwärmeffizienz steigt diese dabei natürlich mit dem zunehmenden ferromagnetischen Charakter des Werkstücks (Wälzlagers).

## Patentansprüche

1. Vorrichtung (2) zum Anwärmen eines Werkstücks (4, 6), insbesondere eines Wälzlagers, umfassend:
a) eine Auflagefläche (8) zur liegenden Lagerung des Werkstücks (4); und
b) eine unterhalb der Auflagefläche (8) angeordnete einlagige Magnetspule (10), die der Formgebung der Auflagefläche (8) im Bezug auf ihre überdeckte Fläche und Steigung im Wesentlichen folgt, wobei die Formgebung der Magnetspule (10) die magnetischen Feldlinien im Innenbereich des Werkstücks (4, 6) konzentriert; und
c) einen Treiberschwingkreis (14) zur Erzeugung eines Wechselmagnetfeldes in der Magnetspule (10).
**dadurch gekennzeichnet, dass** die Auflagefläche eine kegelstumpf-artig geformte Auflagefläche ist.

2. Vorrichtung nach Patentanspruch 1, **dadurch gekennzeichnet, dass**
unterhalb der Magnetspule (10) radial verlaufende Ferritstäbe (16) angeordnet sind.

3. Vorrichtung nach Anspruch 1 oder 2, **dadurch gekennzeichnet, dass**
im Zentrum der Auflagefläche (8) ein kaminartig geformter Zapfen (18) angeordnet ist, auf dessen Aussenumfang ebenfalls Windungen (20) der Magnetspule (10) angeordnet sind.

4. Vorrichtung nach Anspruch 1 oder 2, **dadurch gekennzeichnet, dass**
im Zentrum der Auflagefläche (8) ein kegelförmiger Aufsatz mit einem Ferritkern angeordnet ist.

5. Vorrichtung nach einem der Ansprüche 1 bis 4, **dadurch gekennzeichnet, dass**
eine Frequenz des Wechselmagnetfeldes im Bereich von 10 bis 50 kHz, vorzugsweise im Bereich von 20 bis 30 kHz, liegt.

6. Vorrichtung nach einem der Ansprüche 1 bis 5, **dadurch gekennzeichnet, dass**
die Auflagefläche (8) ein wärmebeständiger Kunststoffteller ist, der vorzugsweise eine genormten Wälzlagermassen entsprechende Rasterung oder Stufenzentrierung aufweist.

7. Vorrichtung nach einem der Ansprüche 1 bis 6, **dadurch gekennzeichnet, dass**
der Treiberschwingkreis (14) seinen Arbeitspunkt automatisch durch ein Abstimmen der Frequenz in Abhängigkeit von der Impulsantwort zumindest möglichst nahe an der Resonanzfrequenz wählt.

8. Vorrichtung nach einem der Ansprüche 1 bis 7, **dadurch gekennzeichnet, dass**
eine Temperatursonde (22) zur Messung der Temperatur des Wälzlagers (4) zur Einstellung des Treiberschwingkreises (14) vorgesehen ist.

9. Vorrichtung nach einem der Ansprüche 1 bis 8, **dadurch gekennzeichnet, dass**
eine Timerschaltung vorgesehen ist, um den Treiberschwingkreis (14) für eine vorgebbare Zeitdauer einzuschalten.

## Claims

1. Device (2) for heating a work piece (4, 6), in particular a ball bearing, comprising:
a) a bearing area (8) for the horizontal storing of a work piece (4); and
b) a single-layered magnetic coil (10) arranged underneath the bearing area (8), said single-layered magnetic coil (10) basically following the design of the bearing area (8) with regard to its covered area and its inclination, whereas the design of the magnetic coil (10) concentrates the magnetic field lines in the inner area of the work piece (4, 6); and
c) a driver circuit (14) for the generation of a AC magnetic field in the magnetic coil (10),
**characterized in that** the bearing area is a truncated-like shaped bearing area.

2. Device according to claim 1, **characterized in that**,
radial proceeding ferrite rods (16) are arranged underneath the magnetic coil (10).

3. Device according to claim 1 or 2, **characterized in that**,
in the centre of the bearing area (8) a funnel-like shaped pivot (18) is arranged, said pivot (18) receiving windings (20) of the magnetic coil (10) on its circumferential section.

4. Device according to claim 1 or 2, **characterized in that** a cone-shaped attachment with a ferrite core is arranged in the centre of the bearing area (8).

5. Device according to one of the claims 1 to 4, **characterized in that**,
a frequency of the AC magnetic field ranges from 10 to 50 kHz, preferably in the range from 20 to 30 kHz.

6. Device according to one of the claims 1 to 5, **characterized in that**,
the bearing area (8) is a heat resistant synthetic plate, which preferably features a stage cementing shape or a respective grating, being aligned to normed dimensions of the ball bearing.

7. Device according to one of the claims 1 to 6, **characterized in that**,
the driver circuit (14) chooses its operating point automatically by adjusting the frequency in response to the impulse feedback at least substantially close to the resonance frequency of the driver circuit (14).

8. Device according to one of the claims 1 to 7, **characterized in that**
a temperature sensor (22) is provided for measuring the temperature of the ball bearing (4), for the sake of adjusting the drive frequency of the driver circuit (14).

9. Device according to one of the claims 1 to 8, **characterized in that**,
a timer circuit is provided in order to activate the driver circuit (14) for a predetermined period of time.

## Revendications

1. Dispositif ( 2 ) de chauffage léger d'une pièce (4, 6)notamment d'un palier à roulement comprenant :
a) une portée ( 8 ) pour porter la pièce ( 4 ) et
b) une bobine ( 10 ) magnétique monocouche qui est disposée sous la portée ( 8 ) et qui suit sensiblement la forme donnée à la portée ( 8 ) en ce qui concerne sa surface recouverte et son pas, la forme donnée à la bobine ( 10 ) magnétique concentrant les lignes de forces magnétiques à l'intérieur de la pièce ( 4, 6 ) et
c) un circuit ( 14 ) oscillant d'attaque pour la production d'un champ magnétique alternatif dans la bobine ( 10 ) magnétique,
**caractérisé en ce que** la portée est une portée conformée à la manière d'un tronc de cône.

2. Dispositif suivant la revendication 1, **caractérisé en ce que** des barreaux ( 16 ) de ferrite s'étendant radialement sont disposés en dessous de la bobine ( 10 ) magnétique.

3. Dispositif suivant la revendication 1 ou 2, **caractérisé en ce qu'**au centre de la portée ( 8 ) est disposé un tenon ( 18 ) qui est conformé à la manière d'une cheminée et sur le pourtour extérieur duquel sont disposés également des spires ( 20 ) de la bobine ( 10 ) magnétique.

4. Dispositif suivant la revendication 1 ou 2, **caractérisé en ce qu'**au centre de la portée ( 8 ) est disposée une coiffe conique ayant un noyau de ferrite.

5. Dispositif suivant l'une des revendications 1 à 4, **caractérisé en ce qu'**une fréquence du champ magnétique alternatif va de 10 à 5 kHz, en allant de préférence de 20 à 30 kHz.

6. Dispositif suivant l'une des revendications 1 à 5, **caractérisé en ce que** la portée ( 8 ) est un plateau en matière plastique qui résiste à la chaleur et qui a, de préférence, un quadrillage ou un centrage en palier correspondant à des masses normées du palier à roulement.

7. Dispositif suivant l'une des revendications 1 à 6, **caractérisé en ce que** le circuit ( 14 ) oscillant d'attaque choisit son point de travail automatiquement par un accord de la fréquence en fonction de la réponse impulsionnelle, au moins le plus possible près de la fréquence de résonance.

8. Dispositif suivant l'une des revendications 1 à 7, **caractérisé en ce qu'**il est prévu une sonde ( 22 ) de température pour la mesure de la température du palier ( 4 ) à roulements afin de régler le circuit ( 14 ) oscillant d'attaque.

9. Dispositif suivant l'une des revendications 1 à 8, **caractérisé en ce qu'**il est prévu un circuit de minuterie pour mettre en circuit le circuit ( 4 ) oscillant d'attaque pendant une durée pouvant être donnée à l'avance.
